Europäisches Patentamt

European Patent Office

Office européen des brevets

(11) Veröffentlichungsnummer: **0 330 918 B1**

(19)

(12) **EUROPÄISCHE PATENTSCHRIFT**

(45) Veröffentlichungstag der Patentschrift: **23.12.92**

(21) Anmeldenummer: **89102658.5**

(22) Anmeldetag: **16.02.89**

(51) Int. Cl.⁵: **B60T 13/52**, B60T 17/02, B60T 17/18

(54) **Unterdruckversorgungssystem in einem Kraftfahrzeug.**

(30) Priorität: **03.03.88 DE 3806916**

(43) Veröffentlichungstag der Anmeldung:
**06.09.89 Patentblatt 89/36**

(45) Bekanntmachung des Hinweises auf die
Patenterteilung:
**23.12.92 Patentblatt 92/52**

(84) Benannte Vertragsstaaten:
**CH DE LI SE**

(56) Entgegenhaltungen:
**DE-A- 2 727 153**
**DE-A- 3 011 360**
**FR-A- 2 316 106**
**FR-A- 2 332 894**
**GB-A- 2 053 375**

(73) Patentinhaber: **DAIMLER-BENZ AKTIENGE-
SELLSCHAFT**
**Mercedesstrasse 136**
**W-7000 Stuttgart 60(DE)**

(72) Erfinder: **Bender, Franz**
**Egerlandstrasse 97**
**W-7317 Wendlingen(DE)**

## Beschreibung

Die Erfindung bezieht sich auf ein Unterdruckversorgungssystem mit den Merkmalen des Oberbegriffs des Patentanspruchs 1.

Ein Unterdruckversorgungssystem dieser Gattung ist bekannt (DE-OS 31 24 153).

Rückschlagventile zwischen Unterdruckerzeuger und unterschiedlichen Verbrauchern oder auch Verbrauchergruppen werden üblicherweise in die entsprechenden Versorgungsleitungen eingebaut, um bei Leckagen an einzelnen Verbrauchern zu vermeiden, daß einströmende Atmosphärenluft das Unterdruckniveau an den nicht betroffenen Verbrauchern nachteilig beeinflußt.

Strömungsdrosseln, die vor Neben- oder sogenannte Komfort-Unterdruckverbraucher (Scheinwerferverstellmotoren, Klimaanlagenstellmotoren) angeordnet sind, sichern einem von demselben Unterdruckerzeuger evakuierbaren Bremskraftverstärker die aus Fahrsicherheitsgründen anzustrebende Versorgungspriorität.

Es ist auch bekannt, Unterdruckpumpen mit Zwei getrennten Sauganschlüssen zu verwenden (DE-OS 32 43 984), wobei der eigene Sauganschluß für die Nebenverbraucher mit einer Strömungsdrossel versehen ist

In von der Anmelderin hergestellten Fahrzeugen mit Dieselmotor ist die vorstehend erwähnte Anordnung im Einsatz, wobei aber noch zusätzlich in der Saugleitung zum Bremskraftverstärker ein Rückschlagventil angeordnet ist, um auch bei einem Atmosphärendruck-Strömungskurzschluß durch die Unterdruckpumpe das Unterdruckniveau am Bremskraftverstärker zu halten. Vor dem Rückschlagventil zweigt von der Saugleitung zum Bremskraftverstärker noch eine gedrosselte Nebenleitung ab, die nur zur Nullverstellung der Einspritzpumpenregelstange beim Abstellen des Dieselmotors angezapft wird und aus Sicherheitsgründen eine Einzelleitung sein muß.

Mit steigender Anzahl von komfortfördernd eingesetzten Unterdruckverbrauchern in Kraftfahrzeugen sollte auch deren Versorgung ständig gewährt werden können Bei den bekannten Systemen sollte diese vor allem im Hinblick darauf verbessert werden, daß das niedrigste Unterdruckniveau am Bremskraftverstärker nur dann zur Verfügung stehen muß, wenn die Hilfskraftbremse wirklich betätigt wird.

Aufgabe der Erfindung ist es daher, ein gattungsgemäßes Unterdruckversorgungssystem so auszubilden, daß bei nicht betätigter Hilfskraftbremse die Unterdruckversorgung von Nebenverbrauchern verbessert wird.

Diese Aufgabe wird mit den kennzeichnenden Merkmalen des Patentanspruchs 1 und des nebengeordneten Anspruchs 14 erfindungsgemäß gelöst.

Mit einer bypaßartig angeordneten Überbrückung des zwischen Unterdruckerzeuger und Nebenverbraucher geschalteten Rückschlagventil-Strömungsdrossel-Ensembles - gemäß Anspruch 1 - wird der Gesamtströmungswiderstand der Versorgung der Nebenverbraucher trotz der weiteren (Bypaß-) Strömungsdrossel vermindert, so daß bei unbetätigter Hilfskraftbremse praktisch die volle Unterdruckleistung zur Verfügung steht, wenn die Nebenverbraucher benutzt werden.

Es ist bereits ein Unterdruckversorgungssystem für einen Bremskraftverstärker und wenigstens einen weiteren Verbraucher bekannt (DE-OS 31 05 041), in welchem die Nebenverbraucher-Zweigleitung eine Strömungsdrossel zur Sicherung der vorrangigen Versorgung des Bremskraftverstärkers sowie ein zu dieser Strömungsdrossel fluidisch parallel geschaltetes Rückschlagventil enthält. Zwar wird der gedrosselte Leitungsabschnitt dort als "Umwegleitung" bezeichnet, er stellt jedoch aufgrund der vorgesehenen Orientierung des parallelen Rückschlagventils - über welches eine Evakuierung des Nebenverbrauchers nicht möglich sein soll - in Wirklichkeit die einzige Entlüftungsmöglichkeit des Nebenverbrauchers dar. Das Rückschlagventil ermöglicht lediglich eine zusätzliche Evakuierung des Bremskraftverstärkers auf Kosten des Unterdruckniveaus am Nebenverbraucher. Wegen ihrer entgegengesetzten Zielrichtung kann die genannte DE-OS 31 05 041 keinen Hinweis auf die Ausbildung des gattungsbildenden Unterdruckversorgungssystems gemäß dem kennzeichnenden Teil des Anspruchs 1 geben.

Die Unteransprüche 2 bis 13 offenbaren mit ihren kennzeichnenden Merkmalen vorteilhafte Weiterbildungen des Unterdruckversorgungssystems nach Anspruch 1.

Spezielle Bauarten von mit Strömungsdrosseln kombinierten Rückschlagventilen sind bekannt

- ebenfalls aus dem gattungsgemäßen Unterdruckversorgungssystem, wo allerdings eine Strömungsdrossel nur bei gegen seine Rückstellkraft geöffnetem Rückschlagventil zur Wirkung gelangt, und

- aus der DE-OS 28 14 384, wo ein Rückschlagventil mit integrierter und fluidisch parallel angeordneter Strömungsdrossel beschrieben ist.

Indem das zwischen den Unterdruckerzeuger und den oder die weiteren Verbraucher geschaltete Rückschlagventil mit einer relativ kräftigen Rückstellfeder versehen wird, wird sichergestellt, daß die Nebenverbraucher erst dann über dieses Rückschlagventil und die diesem nachgeschaltete relativ weite Strömungsdrossel - parallel zu der engen Bypaß-Strömungsdrossel - evakuiert werden, wenn am Bremskraftverstärker ein mindestens erforderliches Unterdruckniveau erreicht ist. Die Versorgungspriorität des Bremskraftverstärkers ist weiterhin gewährleistet, denn sobald dessen Unterdruckkammer bei Bremsvorgängen belüftet wird, steigt der (absolute) Druck in der Saugleitung, und das zweite Rückschlagventil schließt. Eine geringfügige Erhöhung des erreichbaren (absoluten) Unterdruckniveaus wegen der Bypaßleitung kann bei gleichbleibender Erzeugerleistung ohne weiteres hingenommen werden.

Eine weitere vorteilhafte Ausgestaltung des hier beschriebenen und beanspruchten Unterdruckversorgungssystems wird erreicht, wenn das zweite Rückschlagventil zur noch besseren Sicherung der Bremskraftverstärker - Priorität bei jedem Bremsvorgang durch Fremdkraft - elektrisch, hydraulisch oder auch pneumatisch - geschlossen werden kann.

Ein durch Fremdkraft schaltbares Rückschlagventil in einem Unterdruckversorgungssystem für einen Bremskraftverstärker ist bereits aus der DAS 1 120 293 bekannt. Es wird außer durch Druckunterschiede auch, durch einen mit dem Bremspedal gekoppelten elektrischen Schalter gesteuert, elektromagnetisch geöffnet und verbindet den Bremskraftverstärker zur Verbesserung des diesen beaufschlagenden Unterdruckniveaus mit einem Unterdruckausgleichsbehälter.

Gemäß dem nebengeordneten Anspruch 14 ist in einer Nebenleitung zwischen dem Unterdruckerzeuger und dem wenigstens einen Nebenverbraucher ein in Abhängigkeit vom momentan herrschenden Unterdruck in wenigstens zwei Stellungen umschaltbares Ventil angeordnet.

Diese Nebenleitung

- geht entweder unmittelbar vom Unterdruckerzeuger bzw. von einem eigenen Sauganschluß aus (Zweikreissystem)
- oder führt nur mittelbar, d. h. als Zweigleitung von der zum Bremskraftverstärker führenden Hauptleitung vor dem Rückschlagventil ausgehend, zum Nebenverbraucher (Einkreissystem).

Die Gesamtdrosselung der Nebenverbraucher-Absaugströmung wird variiert, indem in einer Stellung des Ventils eine weitere Strömungsdrossel mit der bereits vorhandenen in Reihe schaltbar ist. In der anderen Ventilstellung erfolgt keine zusätzliche Drosselung. Das Ventil schaltet innerhalb eines vorgegebenen Unterdruck-Wertebereichs, z. B. bei etwa 0,5 bar, um. Oberhalb dieses Bereichs - also zum Atmosphärendruck hin - wird die Absaugströmung stärker gedrosselt, um weiterhin den Bremskraftverstärker vorrangig zu evakuieren. Unterhalb dieses Bereichs reicht das im System vorhandene Unterdruckniveau für einen sicheren Betrieb des Bremskraftverstärkers aus, so daß die Drosselung der Nebenverbraucher-Absaugströmung ohne Sicherheitseinbußen verringert und damit die Nebenverbraucherversorgung verbessert werden kann.

An sich sind derartige Ventilanordnungen, die auf einfache Weise eine variable Drosselung von Strömungen erlauben, vom Prinzip her bereits bekannt. So zeigt die DE-OS 30 11 360 eine Druckluftanlage für ein Fahrzeug mit einem pneumatisch in zwei Stellungen und auf zwei entsprechende Leitungsabschnitte umschaltbaren 3/2-Wege-Ventil. Dieses schaltet in einer Stellung einen frei durchgängigen und in der anderen Stellung einen mit einer Drossel versehenen Leitungsabschnitt in eine Druckluftleitung ein. Mit dieser Anordnung wird die von einem dem Ventil nachgeschalteten Druckregler abzublasende Luftmenge verringert, indem der Systemdruck hinter dem Ventil bzw. im Druckregler dieses von einem bestimmten, ausreichenden Druckniveau an in die Stellung "Drosselung" umschaltet. Ferner ist aus der DE-PS 35 26 763 eine ähnliche Anordnung eines elektromagnetisch schaltbaren 3/2-Wege-Ventils bekannt, welches in Abhängigkeit von einem elektrisch erfaßten Systemdruck entweder einen gedrosselten oder einen ungedrosselten Leitungsabschnitt zwischen eine Bidruckpumpe und von dieser beaufschlagbare Verbraucher schaltet. Die Anordnung dient dem Zweck, mehrere Verbraucher mit unterschiedlichen Druckniveau-Anforderungen an eine einzelne Druckquelle anschließen zu können.

Beide zuletzt erwähnten Druckschriften geben keinen Hinweis auf die mit der Erfindung angestrebte Verbesserung.

Die Unteransprüche 15 bis 24 offenbaren mit ihren kennzeichnenden Merkmalen vorteilhafte Weiterbildungen des Unterdruckversorgungssystems gemäß dem nebengeordneten Anspruch 14.

Ausführungsbeispiele des erfindungsgemäßen Unterdruckversorgungssystems sind in der Zeichnung schematisch dargestellt und werden im folgenden näher beschrieben.

Es zeigen:

Figur 1
ein Unterdruckversorgungssystem mit einem Unterdruckerzeuger, der einen einzelnen Sauganschluß hat,

Figur 2
ein System mit einem Unterdruckerzeuger mit zwei Sauganschlüssen,

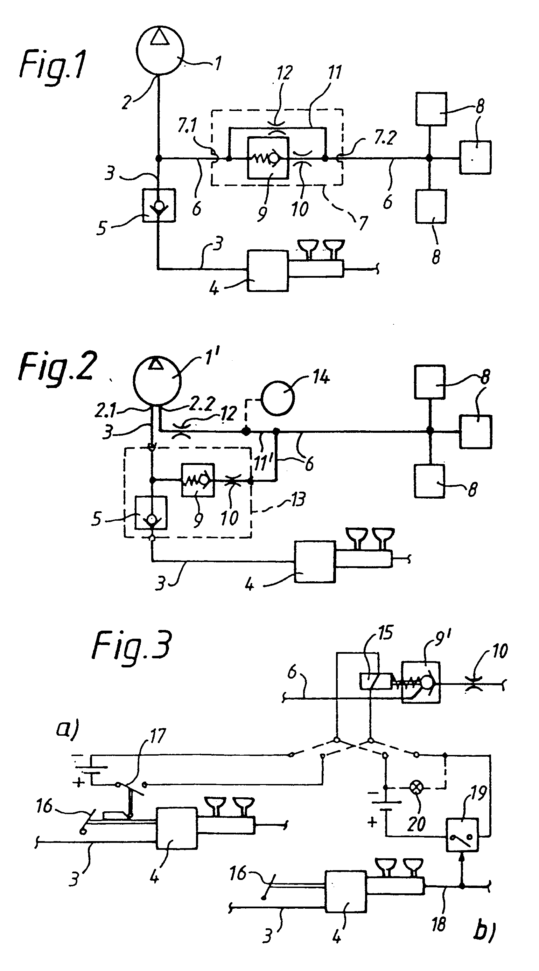

Figur 3a) und b)
Varianten zur Steuerung der Fremdkraft zum Schließen des zweiten Rückschlagventils,

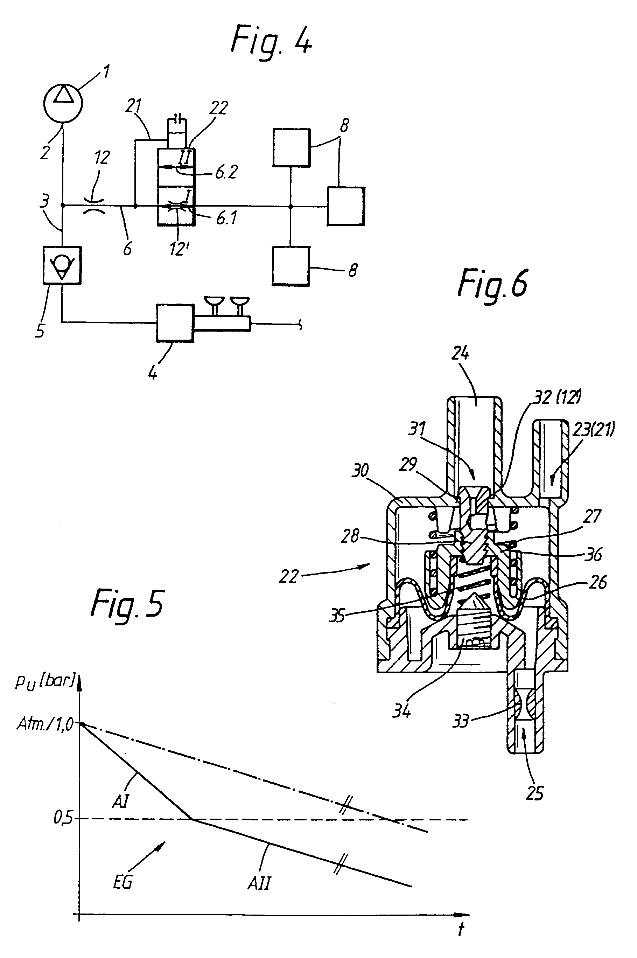

Figur 4
ein anderes Ausführungsbeispiel mit einem in Abhängigkeit von dem im Unterdruckversorgungssystem herrschenden Unterdruck pneumatisch umschaltbaren Ventil, welches in einer Stellung eine gedrosselte und in einer anderen Stellung eine ungedrosselte Absaugströmung durchläßt,

Figur 5

ein Diagramm, welches die Wirkung des umschaltbaren Ventils auf den über einer Zeitachse aufgetragenen Druckabbau am Bremskraftverstärker verdeutlicht, und

Figur 6

ein Ausführungsbeispiel für ein in dem Unterdruckversorgungssystem nach Figur 4 vorteilhaft verwendbares pneumatisch umschaltbares Ventil.

In einem sogenannten Einkreis-Unterdruckversorgungssystem (**Figur** 1) hat ein Unterdruckerzeuger 1 - z. B. eine mechanisch angetriebene Pumpe - einen einzelnen Sauganschluß 2, an welchen eine Hauptleitung 3 - auch als Master-Vac-Leitung bezeichnet - angeschlossen ist, die zu einem symbolisch angedeuteten Unterdruck-Bremskraftverstärker 4 führt. In die Hauptleitung 3 ist ein erstes Rückschlagventil 5 eingesetzt, welches nur das Evakuieren der Bremskraftverstärker-Unterdruckkammer gestattet und bereits bei geringer Unterdruckbeaufschlagung durch den Unterdruckerzeuger 1 öffnet.

Vor dem ersten Rückschlagventil 5 - vom Unterdruckerzeuger 1 her betrachtet - mündet eine Zweigleitung 6 in die Hauptleitung 3. Diese Zweigleitung 6 führt zunächst zu einem ersten Leitungsanschluß 7.1 eines Gehäuses 7 und von einem zweiten Leitungsanschluß 7.2 zu einem oder mehreren schematisch angedeuteten weiteren Unterdruckverbrauchern 8. Das können z. B. Klappenstellelemente einer Klimaanlage oder Scheinwerfer-Verstellmotoren sein, die bei Bedarf über nicht dargestellte schaltbare Ventile mit Unterdruck beaufschlagt werden.

In dem Gehäuse 7 sind zwischen den beiden Leitungsanschlüßen 7.1 und 7.2

- einerseits ein zweites Rückschlagventil 9 und eine mit diesem fluidisch in Reihe geschaltete erste Strömungsdrossel 10,
- andererseits eine Bypaßleitung 11 mit einer zweiten Strömungsdrossel 12 parallel zum zweiten Rückschlagventil 9 und zu der ersten Strömungsdrossel 10

angeordnet.

Das zweite Rückschlagventil 9 wird mit einer (durch ein Federsymbol angedeuteten) wesentlich höheren Rückstellkraft geschlossen gehalten als das erste Rückschlagventil 5; es öffnet erst bei einem saugseitigen Unterdruck-Absolutwert von etwa 0,4 bar. Über die vorzugsweise 0,8 mm im Durchmesser geöffnete zweite Strömungsdrossel 12 in der Bypaßleitung 11 ist dennoch eine ständige, wenn auch eingeschränkte Versorgung der weiteren Verbraucher 8 mit Unterdruck gewährleistet.

**Figur** 2 zeigt ein sogenanntes Zweikreissystem, in welchem eine Unterdruckpumpe 1' mit zwei getrennten Sauganschlüßen 2.1 und 2.2 verwendet wird. An den ersten Sauganschluß 2.1 ist wieder die Hauptleitung 3 angeschlossen, während an den zweiten Sauganschluß 2.2 eine Bypaßleitung 11' mit der zweiten Strömungsdrossel 12 angeschlossen ist.

Die beiden Rückschlagventile 5 und 9, die erste Strömungsdrossel 10 und der Abzweig der Zweigleitung 6 von der Hauptleitung 3 sind in der Ausführung nach Figur 2 in ein gemeinsames Gehäuse 13 eingebaut. Dieses hat nach außen hin zwei Anschlüsse für die Hauptleitung 3 und einen Anschluß für die Zweigleitung 6. Die getroffene Anordnung vermindert Leckagerisiken aufgrund fehlerhafter Leitungsanschlüsse an Rückschlagventilen oder Verzweigungen, wie beim Gehäuse 7 in Figur 1.

Die Bypaßleitung 11' und die Zweigleitung 6 werden außerhalb des Gehäuses 13 vor den Verbrauchern 8 zusammengeführt, wobei an die Bypaßleitung 11' noch ein Unterdruckausgleichsbehälter 14 angeschlossen sein kann.

In **Figuren 3a)** und **3b)** sind schließlich zwei Varianten zum Schließen eines zweiten Rückschlagventils 9' durch Fremdkraft bei Betätigung der Hilfskraftbremse dargestellt. In beiden Fällen soll das Rückschlagventil 9' elektromagnetisch durch die angedeutete Wicklung 15 geschlossen werden können. Als Auslöseschalter der elektromagnetisch bewirkten Schließbewegung wird in Figur 3a) ein mit einem Bremspedal 16 gekuppelter, mechanisch schließbarer Schalter 17, in Figur 3b) alternativ ein im hydraulischen oder pneumatischen Bremsleitungssystem 18 des Kraftfahrzeugs angeordneter druckbetätigbarer Schalter 19 gezeigt.

Die Auslösefunktion der Ventilschließbewegung kann vorteilhaft dem ohnehin in jedem Kraftfahrzeug vorhandenen Bremslichtschalter zusätzlich zugeordnet werden, was durch eine in Figur 3b) eingezeichnete, zur Wicklung 15 parallelgeschaltete Lampe 20 anschaulich gemacht wird.

In Figur 4 - in welcher schon in der Beschreibung der vorhergehenden Figuren erwähnte, hier ebenfalls verwendete Systemelemente mit gleichen Positionszeichen versehen sind - ist eine weitere erfindungsgemäße Lösungsmöglichkeit dargestellt, die weder eine ständig offene Bypaßleitung noch ein Rückschlagventil im Nebenverbraucherzweig erfordert. Prinzipiell ist diese Lösung wiederum für ein Einkreissystem ebenso wie für ein Zweikreissystem geeignet, wird jedoch nur für ersteres dargestellt. Daher ist die "Nebenleitung" hier eine Zweigleitung der Hauptleitung.

Die Zweigleitung 6 enthält nunmehr zwischen der bereits vorhandenen Strömungsdrossel 12 und den Nebenverbrauchern 8 eine parallele Anordnung eines mit einer zusätzlichen Strömungsdrossel 12' versehenen Abschnitts 6.1 und eines frei durchgängigen Abschnitts 6.2. Ein über einen Steueranschluß 21 pneumatisch schaltbares Ventil 22 schaltet eine Verbindung zwischen dem Unterdruckerzeuger 1 und den Nebenverbrauchern 8 entweder über den Abschnitt 6.1 (Stellung I) oder über den Abschnitt 6.2 (Stellung II). Der Steueranschluß 21 ist ebenfalls an die Zweigleitung 6 hinter der Strömungsdrossel 12 angeschlossen. Der pneumatische Antrieb des Ventils 22 ist so eingestellt, daß er das Ventil 22 bei einem Unterdruck zwischen 1 und etwa 0,5 bar in der Zweigleitung 6 in seiner Stellung I hält - in welcher wegen der Addition zweier Drosselwiderstände nur eine stark gedrosselte Absaugströmung möglich ist - und unterhalb etwa 0,5 bar Unterdruck in seine Stellung II umschaltet, in welcher keine nennenswerte zusätzliche Drosselwirkung vorliegt. Die Einstellung der Schaltschwelle des Ventils 22 kann z. B. durch eine in bekannter Weise veränderliche Federvorspannung des Ventils, durch festen Einbau von Federn mit je nach Bedarf unterschiedlichen Kennlinien oder sonstige Maßnahmen erfolgen.

Eine Bauform der hier symbolisch angedeuteten Integration der Abschnitte 6.1 und 6.2 in das Ventil 22 wird später anhand der Figur 6 beschrieben.

Selbstverständlich kann in der Anordnung nach Figur 4 auch ein elektromagnetisch schaltbares Ventil an die Stelle des dargestellten pneumatisch schaltbaren Ventils 22 treten. Dieses äquivalente Ventil würde dann durch einen Druckschalter gesteuert, der an der Stelle der Zweigleitung anzuordnen wäre, an welcher in Figur 4 der Ventil-Steueranschluß 21 angeschlossen ist.

Mit beiden Anordnungen besitzt die Unterdruckversorgung des Bremskraftverstärkers genau dann hohe Priorität, wenn das Unterdruckniveau im System nicht so niedrig ist, wie es im Normalbetrieb erforderlich ist. Insbesondere tritt dieser Fall ein, wenn das Kraftfahrzeug nach längerem Abstellen gestartet werden soll oder wenn die Hilfskraftbremse stark in Anspruch genommen wird, z. B. beim sogenannten "Stotterbremsen".

Figur 5 verdeutlicht durch eine vom Atmosphärendruckniveau (1,0 bar) ausgehende Linie EG (Evakuierungsgeschwindigkeit), die einen Druckverlauf $p_u$ am Bremskraftverstärker über der Zeit t qualitativ darstellt, die Wirkung der durch das Ventil 22 einschaltbaren Strömungsdrossel 12'. Die Linie EG setzt sich aus zwei unterschiedlich steilen Abschnitten AI und AII zusammen, welche an einer Knickstelle stetig ineinander übergehen. Die Knickstelle markiert den Schaltpunkt des Ventils 22, der hier bei dem bevorzugten Wert von 0,5 bar liegt. Eine steilere Steigung (AI) und damit eine höhere Evakuierungsgeschwindigkeit am Bremskraftverstärker 4 stellt sich ein, wenn das Ventil in Stellung I steht, d. h. wenn die Drossel 12' wirksam mit der Drossel 12 in Reihe geschaltet ist und ihre Widerstände addiert werden. In Stellung II des Ventils - wenn die Drossel 12' unwirksam ist - liegt die Evakuierungsgeschwindigkeit des Bremskraftverstärkers 4 niedriger, was gleichbedeutend mit besserer Saugleistung des Unterdruckerzeugers 1 an den Nebenverbrauchern 8 ist. Sobald aber ein Druckanstieg im System vorliegt, der über den Schaltpunkt des Ventils 22 hinausführt, wird wieder die Drossel 12' wirksam geschaltet - das Ventil kehrt in seine (Ruhe-)Stellung I zurück -, und die Saugleistung des Unterdruckerzeugers 1 am Bremskraftverstärker 4 wird entsprechend erhöht.

Da der Unterdruck im normalen Betrieb deutlich unter 0,5 bar liegt, sind Schaltvorgänge des Ventils 22 im Betrieb nur bei ungewöhnlich hoher Beanspruchung der Hilfskraftbremse zu erwarten.

Eine strichpunktiert gezeichnete Linie mit gleicher Steigung wie der Abschnitt AII der Linie EG deutet an, daß das gewünschte Unterdruckniveau am Bremskraftverstärker ohne die zusätzlich schaltbare Drossel 12' bei etwa gleich guter Versorgung der Nebenverbraucher wesentlich später erreicht würde.

Figur 6 zeigt schließlich ein Ausführungsbeispiel für ein pneumatisch schaltbares Ventil 22 in einer Schnittansicht. Das Ventil 22 hat einen Sauganschlußweg 23, einen Verbraucheranschlußweg 24 und einen Atmosphärenanschlußweg 25. Letzterer ist von den beiden anderen Wegen des Ventils 22 durch eine elastische Membran 26 dauernd getrennt. Die mit einer Vorspannfeder 27 in eine Stellung I vorgespannte Membran wird - in der Art bekannter Rückschlagventile - durch Druckunterschiede auf ihren beiden Seiten geschaltet. Sie ist mit einem Ventilkörper 28 fest verbunden, der mit einem Ventilsitz 29 des Ventilgehäuses 30 korrespondiert. In der Stellung I sitzt der Ventilkörper 28 auf dem Ventilsitz 29 auf. Zwischen dem Sauganschlußweg 23 und dem Verbraucheranschlußweg 24 besteht dann eine Verbindung nur über eine Mittelbohrung 31 im Ventilkörper 28, die eine - als Strömungsdrossel 12' wirkende - Engstelle 32 aufweist. Wenn der Differenzdruck an der Membran 26 - aus Atmosphärendruck am Anschlußweg 25 und Unterdruck am Anschlußweg 23 - die Vorspannkraft der Feder 27 überwiegt - d. h., der Systemunterdruck hat das benötigte Niveau erreicht -, wird die Membran 26 im Gehäuse 30 in Richtung auf den Verbraucheranschlußweg 24 verschoben und hebt dabei den Ventilkörper 28 von seinem Sitz 29 ab. Dadurch wird ein ringspaltförmiger Strömungsquerschnitt freigegeben, der wesentlich größer als die Engstelle 32 im Ventilkörper ist. Der Sauganschlußweg 23 übernimmt also zusätzlich die Funktion des Steuereingangs 21, der in Figur 4 dargestellt ist.

In den Atmosphärenanschlußweg 25 ist noch eine Drosselstelle 33 eingebaut, die nur als einfache, zusätzliche Absicherung gegen ungehemmtes Eindringen von Atmosphärendruck in das Unterdrucksystem bei etwa auftretenden Defekten oder Lecks der Membran 26 dient.

Mit einer Einstellschraube 34 im Ventilgehäuse 30, die über eine zwischengeschaltete Feder 35 auf einen den Ventilkörper 28 mit der Membran 26 fest verbindenden Stützkörper 36 der Membran wirkt, kann die Schaltschwelle des Ventils 22, wie bereits oben erwähnt, in einfacher Weise auf gewünschte Werte eingestellt werden.

## Patentansprüche

1. Unterdruckversorgungssystem für einen Bremskraftverstärker (4) sowie für wenigstens einen weiteren Verbraucher (8) von durch einen Unterdruckerzeuger (1) in einem Kraftfahrzeug bereitgestelltem pneumatischem Unterdruck, in welchem eine Hauptleitung (3) zwischen einem Sauganschluß (2) des Unterdruckerzeugers und dem Bremskraftverstärker mit einem ersten Rückschlagventil (5) versehen ist und in welchem eine Zweigleitung (6) von der Hauptleitung (3) zu dem weiteren Verbraucher (8) zwischen dem Sauganschluß (2) und dem ersten Rückschlagventil (5) abzweigt und ein zweites, eine Absaugströmung von dem weiteren Verbraucher zum Unterdruckerzeuger durchlassendes Rückschlagventil (9) sowie eine mit letzterem fluidisch in Reihe geschaltete Strömungsdrossel (10) enthält, **dadurch gekennzeichnet,** daß fluidisch zu dem zweiten Rückschlagventil (9) und der mit letzterem in Reihe geschalteten ersten Strömungsdrossel (10) parallel eine Bypaßleitung (11, 11') mit einer zweiten Strömungsdrossel (12) angeordnet ist.

2. Unterdruckversorgungssystem nach Anspruch 1, **dadurch gekennzeichnet,** daß die Bypaßleitung (11') an einen eigenen Sauganschluß (2.2) des - in an sich bekannter Weise - als Unterdruckpumpe mit zwei getrennten Sauganschlüssen (2.1, 2.2) ausgebildeten Unterdruckerzeugers (1) angeschlossen ist.

3. Unterdruckversorgungssystem nach Anspruch 1, **dadurch gekennzeichnet,** daß die Bypaßleitung (11) und die zweite Strömungsdrossel (12) einerseits, das zweite Rückschlagventil (9) und die mit diesem in Reihe angeordnete erste Strömungsdrossel (10) andererseits in ein gemeinsames Gehäuse (7) mit zwei Leitungsanschlüssen (7.1, 7.2) für je ein Teilstück der Zweigleitung (6) integriert sind.

4. Unterdruckversorgungssystem nach Anspruch 2, **dadurch gekennzeichnet,** daß die beiden Rückschlagventile (5, 9), die erste Strömungsdrossel (10) und die Abzweigung der zweigleitung (6) von der Hauptleitung (3) in einem gemeinsamenh Gehäuse (13) mit drei Leitungsanschlüssen angeordnet sind.

5. Unterdruckversorgungssystem nach einem der vorstehenden Ansprüche, **dadurch gekennzeichnet,** daß das zweite Rückschlagventil (9) mit einer höheren Rückstellkraft als das erste Rückschlagventil (5) in seine geschlossene Lage vorspannbar ist.

6. Unterdruckversorgungssystem nach Anspruch 5, **dadurch gekennzeichnet,** daß die erste Strömungsdrossel (10) zwischen dem zweiten Rückschlagventil (9) und dem weiteren Verbraucher (8) angeordnet ist.

7. Unterdruckversorgungssystem nach Anspruch 1 oder 5, **dadurch gekennzeichnet,** daß das zweite Rückschlagventil (9) durch Fremdkraft schließbar ist.

8. Unterdruckversorgungssystem nach Anspruch 7, **dadurch gekennzeichnet,** daß die Fremdkraft zum Schließen des zweiten Rückschlagventils (9) durch einen mit einer Betätigungsvorrichtung des Bremskraftverstärkers gekuppelten elektrischen Schalter (17) steuerbar ist.

9. Unterdruckversorgungssystem nach Anspruch 7, **dadurch gekennzeichnet,** daß die Fremdkraft zum Schließen des zweiten Rückschlagventils (9) durch einen mit fluidischem Bremssystemdruck beaufschlagten elektrischen Druckschalter (19) steuerbar ist.

10. Unterdruckversorgungssystem nach Anspruch 1, **dadurch gekennzeichnet,** daß die in der Bypaßleitung (11, 11') angeordnete Strömungsdrossel (12) in ihrem kleinsten freien Querschnitt einen Durchmesser zwischen 0,6 und 1,0 mm, vorzugsweise 0,8 mm hat.

**11.** Unterdruckversorgungssystem nach Anspruch 5,
**dadurch gekennzeichnet,**
daß das zweite Rückschlagventil (9) geschlossen wird, wenn der absolute Druck vor dem ersten Rückschlagventil (5) größer als ca. 0,4 bar ist.

**12.** Unterdruckversorgungssystem nach Anspruch 8 oder 9,
**dadurch gekennzeichnet,**
daß der elektrische Schalter (16, 17) der Bremslichtschalter des Kraftfahrzeuges ist.

**13.** Unterdruckversorgungssystem nach Anspruch 1 mit einem dem wenigstens einen weiteren Verbraucher fluidisch zugeordneten Unterdruckausgleichsbehälter,
**dadurch gekennzeichnet,**
daß der Unterdruckausgleichsbehälter (14) an die Bypaßleitung (11') angeschlossen ist.

**14.** Unterdruckversorgungssystem für einen Bremskraftverstärker (4) sowie für wenigstens einen weiteren Verbraucher (8) von durch einen Unterdruckerzeuger (1) in einem Kraftfahrzeug bereitgestelltem pneumatischem Unterdruck,
in welchem eine Hauptleitung (3) zwischen einem Sauganschluß (2) des Unterdruckerzeugers und dem Bremskraftverstärker mit einem Rückschlagventil (5) versehen ist,
in welchem eine wenigstens mittelbar von dem Unterdruckerzeuger (1) zu dem weiteren Verbraucher (8) führende Nebenleitung (6) vorgesehen ist,
die wenigstens eine Strömungsdrossel (12) zur Drosselung der Absaugströmung vom Nebenverbraucher (8) zum Unterdruckerzeuger (1) und ein die Absaugströmung durchlassendes Ventil (22) enthält,
**dadurch gekennzeichnet,**
daß das Ventil (22) in Abhängigkeit von dem im System momentan herrschenden Unterdruck zwischen wenigstens zwei Stellungen (I, II) umschaltbar ist, wobei die Absaugströmung
- in einer Stellung (I) des Ventils (22) ferner durch eine mittels des Ventils (22) mit der ersten Strömungsdrossel (12) fluidisch in Reihe schaltbare weitere Strömungsdrossel (12') und
- in einer anderen Stellung (II) des Ventils (22) nur durch die erste Strömungsdrossel (12)
gedrosselt wird.

**15.** Unterdruckversorgungssystem nach Anspruch 14,

**dadurch gekennzeichnet,**
daß das Ventil (22) pneumatisch unmittelbar durch den im System herrschenden Unterdruck innerhalb eines bestimmten Unterdruck-Wertebereichs umschaltbar ist.

**16.** Unterdruckversorgungssystem nach Anspruch 14,
**dadurch gekennzeichnet,**
daß das Ventil elektromagnetisch und gesteuert durch einen auf den im System herrschenden Unterdruck innerhalb eines bestimmten Unterdruck-Wertebereichs ansprechenden elektrischen Druckschalter umschaltbar ist.

**17.** Unterdruckversorgungssystem nach Anspruch 15 oder 16,
**dadurch gekennzeichnet,**
daß das Ventil (22) als 2/2-Wege-Ventil ausgebildet ist.

**18.** Unterdruckversorgungssystem nach Anspruch 15,
**dadurch gekennzeichnet,**
daß das Ventil (22) einen Sauganschlußweg (23,21), einen Verbraucheranschlußweg (24) und einen Atmosphärenanschlußweg (25) in einem Gehäuse (30) aufweist,
daß der Sauganschlußweg (23,21) und der Verbraucheranschlußweg (24) einerseits und der Atmosphärenanschlußweg (25) andererseits durch eine Membran (26) ständig voneinander getrennt sind,
daß die Membran (26) innerhalb eines bestimmten Bereichs des Verhältnisses zwischen dem Unterdruck am Sauganschlußweg (23,21) und dem Atmosphärendruck am Atmosphärenanschlußweg (25) umschaltbar ist und
daß ein Ventilkörper (28) mit der Membran (26) verbunden ist, durch welchen die Umschaltung des Ventils (22) zwischen den beiden Stellungen (I bzw. II) mit bzw. ohne zusätzliche Drosselung der Absaugströmung erfolgt.

**19.** Unterdruckversorgungssystem nach Anspruch 18,
**dadurch gekennzeichnet,**
daß in dem Atmosphärenanschlußweg (25) des Ventils (22) eine Drosselstelle (33) vorgesehen ist.

**20.** Unterdruckversorgungssystem nach Anspruch 14,
**dadurch gekennzeichnet,**
daß die weitere Strömungsdrossel (12') als Querschnittsverengung mit einem freien Durchmesser zwischen 0,5 und 1,0 mm, vorzugsweise 0,8 mm, ausgebildet ist und daß die erste Strömungsdrossel (12) einen freien Durchmesser zwischen 0,8 und 1,2 mm, vorzugsweise 1,0 mm, aufweist.

21. Unterdruckversorgungssystem nach den Ansprüchen 18 und 20 oder 19 und 20, **dadurch, gekennzeichnet,** daß die weitere Strömungsdrossel (12') in den Ventilkörper (28) integriert ist.

22. Unterdruckversorgungssystem nach Anspruch 14, 18 oder 19, **dadurch gekennzeichnet,** daß das Ventil (22) eine einstellbare Schaltschwelle aufweist.

23. Unterdruckversorgungssystem nach Anspruch 14, 18 oder 19, **dadurch gekennzeichnet,** daß der Umschaltpunkt bzw. die Schaltschwelle des Ventils (22) im Unterdruck-Wertebereich zwischen 0,7 und 0,4 bar, vorzugsweise bei 0,5 bar, eingestellt ist.

24. Unterdruckversorgungssystem nach Anspruch 14, **dadurch gekennzeichnet,** daß das Ventil (22) zwischen der ersten Strömungsdrossel (12) und dem Nebenverbraucher (8) angeordnet ist.

## Claims

1. Vacuum supply system for a braking force amplifier (4) as well as for at least one further device (8) consuming pneumatic under-pressure produced by a vacuum producer (1) in a motor vehicle, in which a main duct (3) is provided with a first check valve (5) between a suction connection (2) of the vacuum producer and the braking force amplifier, and in which a branch pipe (6) branches off from the main duct (3) to the further consuming device (8) between the suction connection (2) and the first check valve (5) and contains a second check valve (9) allowing through an exhaust flow from the further consuming device to the vacuum producer, as well as a flow throttle (10) fluidically mounted in series with the latter, characterized in that a by-pass duct (11, 11') with a second flow throttle (12) is mounted fluidically parallel to the second check valve (9) and to the first flow throttle (10) mounted in series with the latter.

2. Vaccum supply system according to claim according to claim 1, characterized in that the by-pass duct (11') is connected to its own suction connection (2.2) of the vacuum producer (1) constructed in per se known manner as vacuum pump with two separate suction connections (2.1, 2.2).

3. Vacuum supply system according to claim 1, characterized in that the by-pass duct (11) and the second low throttle (12) on the one hand, the second check valve (9) and the first flow throttle (10) mounted in series with this, on the other hand, are integrated into a common housing (7) with two duct connections (7.1, 7.2) for respectively each branch pipe of the branch pipe (6).

4. Vacuum supply system according to claim 2, characterized in that the two check valves (5, 9), the first flow throttle (10) and the branch-off duct of the branch pipe (6) from the main duct (3) are mounted in a common housing (13) with three duct connections.

5. Vacuum supply system according to one of the foregoing claims, characterized in that the second check valve (9) can be tensioned with a higher returning force than the first check valve (5) into its closed position.

6. Vacuum supply system according to claim 5, characterized in that the first flow throttle (10) is mounted between the second check valve (9) and the further consumer device (8).

7. Vacuum supply system according to claim 1 or 5, characterized in that the second check valve (9) can be closed by an external force.

8. Vacuum supply system according to claim 7, characterized in that the external force for the closure of the second check valve (9) is controllable by means of an electric switch (17) coupled with an actuator of the braking force amplifier.

9. Vacuum supply system according to claim 7, characterized in that the external force for the closure of the second check valve (9) is controllable by means of an electric pressure switch (19) impinged by fluidic brake system pressure.

10. Vacuum supply system according to claim 1, characterized in that the flow throttle (12) mounted in the bypass duct (11, 11') has in its smallest free cross-section a diameter between 0.6 and 1.0 mm, preferably 0.8 mm.

11. Vacuum supply system according to claim 5, characterized in that the second check valve (9) is closed when the absolute pressure in front of the first check valve (5) is greater than about 0.4 bar.

12. Vacuum supply system according to claim 8 or 9, characterized in that the electric switch (16. 17) is the brake light switch of the motor vehicle.

13. Vacuum supply system according to claim 1 with a vacuum compensation container associated with the at least one further consumer device in fluidic manner, characterized in that the vacuum compensation container (14) is connected with the by-pass duct (11').

14. Vacuum supply system for a braking force amplifier (4) as well as for at least one further device (8) consuming pneumatic under-pressure produced by a vacuum producer (1) in a motor vehicle, in which a main duct (3) is provided with a first check valve (5) between a suction connection (2) of the vacuum producer and the braking force amplifier, in which there is provided a branch pipe (6) at least indirectly connecting from the vacuum producer (1) to the further consumer device (8), which contains at least one flow throttle (12) for throttling the exhaust flow from the further consumer device (8) to the vacuum producer (1) and a valve (22) letting through the exhaust flow, characterized in that the valve (22) depending on the vacuum prevailing for the moment in the system is switchable between at least two positions (I, II), in which state of affairs the exhaust flow is throttled
   - in one position (I) of the valve (22) further by another flow throttle (12') switchable fluidically in series by means of the valve (22) with the first flow throttle (12), and
   - in another position (II) of the valve (22) only by the first flow throttle (12).

15. Vacuum supply system according to claim 14, characterized in that the valve (22) is pneumatically switchable within a specific vacuum values range by the vacuum prevailing in the system.

16. Vacuum supply system according to claim 14, characterized in that the valve (22) is electro-magnetically and controllably switchable by means of an electric pressure switch responding to the vacuum prevailing in the system within a specific range of vacuum values.

17. Vacuum supply system according to claim 15 or 16, characterized in that the valve (22) is designed as a 2/2-way valve.

18. Vacuum supply system according to claim 15, characterized in that the valve (22) has a suction connection path (23, 21), a consumer device connection path (24) and an atmosphere connection path (25) in a housing (30);
   in that the suction connection path (23, 21) and the consumer device connection path (24) on the one hand, and the atmosphere connection path (25) on the other hand are permanently separated one from the other by a membrane (26);
   in that the membrane (26), within a specific range of the ratio between the vacuum at the suction connection (23, 21) and the atmospheric pressure at the atmosphere connection path (25), can be changed-over, and
   in that a valve body (28) is connected with the membrane (26) by means of which the change over of the valve (22) between the two positions (I and II) is effected with or without additional throttling of the exhaust flow.

19. Vacuum supply system according to claim 18, characterized in that a throttle (33) arrangement is provided in the atmosphere connection path (25) of the valve (22).

20. Vacuum supply system according to claim 14, characterized in that the further flow throttle (12') is designed as a cross-sectional constriction with a free diameter between 0.5 and 1.00 mm, preferably 0.8 mm, and in that the first flow throttle (12) has a free diameter between 0.8 and 1.2 mm, preferably 1.0 mm.

21. Vacuum supply system according to claims 18 and 20, or 19 and 20, characterized in that the further flow throttle (12') is integrated into the valve body (28).

22. Vacuum supply system according to claims 14, 18 or 19, characterized in that the valve (22) has an adjustable switching threshold.

23. Vacuum supply system according to claim 14, 18 or 19, characterized in that the change-over point or the switching threshold of the valve (22) in the range of vacuum values is set between 0.7 and 0.4 bar, preferably at 0.5 bar.

24. Vacuum supply system according to claim 14, characterized in that the valve (22) is mounted between the first flow throttle (12) and the further consumer device (8).

**Revendications**

1. Système d'alimentation en dépression pneumatique produite par une générateur (1) de dépression dans un véhicule automobile pour un amplificateur de force de freinage (4) ainsi que pour au moins une autre utilisation (8), dans lequel un conduit principal (3) est équipé d'un premier clapet antiretour (5) entre un raccord d'aspiration (2) du générateur de dépression et l'amplificateur de force de freinage et dans lequel un embranchement (6) allant du conduit principal (3) à l'autre utilisation (8) est branché entre le raccord d'aspiration (2) et le premier clapet antiretour (5) et comprend un second clapet antiretour (9) qui laisse passer un écoulement d'aspiration de l'autre utilisation vers le générateur de dépression, ainsi qu'un étrangleur (10) monté en série dans la circulation du fluide avec ce dernier clapet antiretour (9), caractérisé en ce qu'un conduit en dérivation (11, 11') équipé d'un second étrangleur (12) est disposé en parallèle dans la circulation du fluide avec le second clapet antiretour (9) et avec le premier étrangleur (10) monté en série avec ce dernier.

2. Système d'alimentation en dépression selon la revendication 1, caractérisé en ce que le conduit de dérivation (11') est branché à un raccord propre d'aspiration (2.2) du générateur de dépression (1) formé - de manière connue en soit - en pompe de dépression à deux raccords séparés d'aspiration (2.1, 2.2).

3. Système d'alimentation en dépression selon la revendication 1, caractérisé en ce que le conduit en dérivation (11) et le second étrangleur (12), d'une part, le second clapet antiretour (9) et le premier étrangleur (10) monté en série avec ce dernier, d'autre part, sont intégrés dans un boitier commun (7) comportant deux raccords (7.1, 7.2) dont chacun est destiné à un tronçon de l'embranchement (6).

4. Système d'alimentation en dépression selon la revendication 2, caractérisé en ce que les deux clapets antiretour (5, 9), le premier étrangleur (10) et le branchement de l'embranchement (6) du conduit principal (3) sont disposés dans un boitier commun (13) comportant trois raccords.

5. Système d'alimentation en dépression selon l'une des revendication précédentes, caractérisé en ce que le second clapet antiretour (9) peut être mis sous précontrainte en position de fermeture avec une force de rappel supérieure à celle du premier clapet antiretour (5).

6. Système d'alimentation en dépression selon la revendication 5, caractérisé en ce que le premier étrangleur (10) est disposé entre le second clapet antiretour (9) et l'autre utilisation (8).

7. Système d'alimentation en dépression selon la revendication 1 ou 5, caractérisé en ce que le second clapet antiretour (9) peut être fermé par une force extérieure.

8. Système d'alimentation en dépression selon la revendication 7, caractérisé en ce que la force extérieure de fermeture du second clapet antiretour (9) est commandée par un interrupteur électrique (17) couplé à un dispositif d'actionnement de l'amplificateur de force de freinage.

9. Système d'alimentation en dépression selon la revendication 7, caractérisé en ce que la force extérieure de fermeture du second clapet antiretour (9) est commandée par un interrupteur électrique manométrique (19) soumis à une pression fluidique du système de freinage.

10. Système d'alimentation en dépression selon la revendication 1, caractérisé en ce que la section minimale de passage de l'étrangleur (12) disposé dans le conduit de dérivation (11, 11') a un diamètre compris entre 0,6 et 1,0 mm, de préférence de 0,8 mm.

11. Système d'alimentation en dépression selon la revendication 5, caractérisé en ce que le second clapet antiretour (9) est fermé lorsque la pression absolue régnant en amont du premier clapet antiretour (5) est supérieure à environ à 0,4 bar.

12. Système d'alimentation en dépression selon la revendication 8 ou 9, caractérisé en ce que l'interrupteur électrique (16, 17) est l'interrupteur des feux de freinage du véhicule automobile.

13. Système d'alimentation en dépression selon la revendication 1, comprenant une cuve d'égalisation de la dépression associée dans la circulation du fluide à ladite au moins une autre utilisation, caractérisé en ce que la cuve (14) d'égalisation de la dépression est raccordée au conduit de dérivation (11').

14. Système d'alimentation en dépression pneumatique produite par un générateur de dépression (1 ) dans un véhicule automobile pour un amplificateur de force de freinage (4) ainsi que pour au moins une autre utilisation (8), dans lequel un conduit principal (3) est équipé d'un clapet antiretour (5) entre un raccord d'aspiration (2) du générateur de dépression et l'amplificateur de force de freinage, et dans lequel un conduit secondaire (6) menant au moins indirectement du générateur de dépression (1) à l'autre utilisation (8) est prévu et comprend au moins un étrangleur (12) de l'écoulement d'aspiration entre l'autre utilisation (8) et le générateur de dépression (1), ainsi qu'un distributeur (22) laissant passer l'écoulement d'aspiration, caractérisé en ce que le distributeur (22) est réversible entre au moins deux positions (I, II) en fonction de la dépression régnant momentanément dans le système, l'écoulement d'aspiration étant étranglé

- à une position (I) du distributeur (22), par ailleurs par un autre étrangleur (12') pouvant être mis en série dans la circulation du fluide avec le premier étrangleur (12) au moyen du distributeur (22), et
- uniquement par le premier étrangleur (12) à une autre position (II) du distributeur (22).

15. Système d'alimentation en dépression selon la revendication 14, caractérisé en ce que le distributeur (22) est réversible pneumatiquement, directement par la dépression régnant dans le système dans une plage déterminée de dépression.

16. Système d'alimentation en dépression selon la revendication 14, caractérisé en ce que le distributeur est réversible par voie électromagnétique et de manière commandée par un interrupteur électrique manométrique qui répond à la dépression régnant dans le système dans une plage déterminée de dépression.

17. Système d'alimentation en dépression selon la revendication 15 ou 16, caractérisé en ce que le distributeur est un distributeur 2/2.

18. Système d'alimentation en dépression selon la revendication 15, caractérisé en ce que le distributeur (22) comprend une voie de raccord à l'aspiration (23, 21), une voie de raccord à l'utilisation (24) et une voie de raccord à l'atmosphère (25) à l'intérieur d'une cage (30), en ce que la voie de raccord à l'aspiration (23, 21) et la voie de raccord à l'utilisation (24), d'une part, et la voie de raccord à l'atmosphère (25), d'autre part, sont en permanence séparées par une membrane (26), en ce que la membrane (26) est réversible à l'intérieur d'une plage déterminée du rapport entre la dépression régnant dans la voie de raccord à l'aspiration (23, 21) et la pression atmosphérique régnant dans la voie de raccord à l'atmosphère (25) et en ce qu'un corps de distributeur (28) est relié à la membrane (26) et produit l'inversion du distributeur (22) entre les deux positions (I ainsi que II) avec ou sans étranglement supplémentaire de l'écoulement d'aspiration.

19. Système d'alimentation en dépression selon la revendication 18, caractérisé en ce qu'un étranglement (33) est prévu dans la voie de raccord à l'atmosphère (25) du distributeur (22).

20. Système d'alimentation en dépression selon la revendication 14, caractérisé en ce que l'autre étrangleur (12') a la forme d'un rétrécissement de section avec un diamètre libre compris entre 0,5 et 1,0 mm, de préférence de 0,8 mm, et en ce que le premier étrangleur a un diamètre libre compris entre 0,8 et 1,2 mm, de préférence 1,0 mm.

21. Système d'alimentation en dépression selon les revendications 18 et 20 ou 19 et 20, caractérisé en ce que l'autre étrangleur (12') est intégré dans le corps du distributeur (28).

22. Système d'alimentation en dépression selon les revendications 14, 18 ou 19, caractérisé en ce que le distributeur (22) comporte un seuil réglable d'inversion.

23. Système d'alimentation en dépression selon les revendications 14, 18 ou 19, caractérisé en ce que le point d'inversion ou le seuil d'inversion du distributeur (22) est réglable dans la plage de dépression comprise entre 0,7 et 0,4 bar, de préférence à 0,5 bar.

24. Système d'alimentation en dépression selon la revendication 14, caractérisé en ce que le distributeur (22) est disposé entre le premier étrangleur (12) et l'utilisation secondaire (8).

Fig.1

Fig.2

Fig.3

Fig. 4

Fig.6

Fig. 5

$p_U$ [bar]

Atm./1,0

0,5

AI

EG

AII

t